(19) Europäisches Patentamt
European Patent Office
Office européen des brevets

(11) **EP 4 345 421 A2**

(12) **EUROPEAN PATENT APPLICATION**

(43) Date of publication:
**03.04.2024 Bulletin 2024/14**

(51) International Patent Classification (IPC):
**G01C 25/00** (2006.01)     **G01S 19/23** (2010.01)

(21) Application number: **23179524.6**

(52) Cooperative Patent Classification (CPC):
**G01C 25/005; G01S 5/16; G01S 19/23;
G01S 19/47;** G01C 21/1656

(22) Date of filing: **15.06.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.06.2022  CN 202210691630**

(71) Applicant: **Anhui NIO Autonomous Driving
Technology Co., Ltd.
Hefei, Anhui 230601 (CN)**

(72) Inventors:
• **YANG, Dongsheng**
  **Shanghai, 201805 (CN)**
• **YI, Shichun**
  **Shanghai, 201805 (CN)**
• **YUAN, Hongyuan**
  **Shanghai, 201805 (CN)**
• **SHEN, Dayun**
  **Shanghai, 201805 (CN)**

(74) Representative: **Vossius & Partner
Patentanwälte Rechtsanwälte mbB
Siebertstraße 3
81675 München (DE)**

(54) **METHOD FOR CALIBRATING SENSOR PARAMETERS BASED ON AUTONOMOUS DRIVING,
APPARATUS, STORAGE MEDIUM, AND VEHICLE**

(57)     The disclosure relates to the technical field of autonomous driving, and specifically provides a method for calibrating parameters of a sensor based on autonomous driving, an apparatus, a medium, and a vehicle, which are intended to provide a way to implement online calibration of a plurality of parameters of a sensor based on autonomous driving under the premise of ensuring the calibration accuracy. For this purpose, in the disclosure, calibration enable conditions are determined based on a real-time state of a vehicle, and parameters to be calibrated that are contained in a measurement equation and an observation equation for a plurality of sensors are iteratively updated using an extended Kalman filtering model, until convergence conditions for the parameters to be calibrated are met. According to the disclosure, the plurality of parameters to be calibrated of the plurality of sensors can be calibrated online in real time, which takes a transformation relationship between each sensor and an inertial measurement unit into account, making the calibration process more accurate; moreover, the calibration process is dynamically enabled or disabled based on the real-time state of the vehicle, which takes the impact of the real-time state of the vehicle on the online calibration process into account, making the calibration process more robust.

Establish a measurement equation for a sensor based on an actual measurement state of the sensor — S101

Establish an observation equation for the sensor based on a transformation relationship between a sensor coordinate system for the sensor and an inertial measurement unit coordinate system for an inertial measurement unit, where the measurement equation and the observation equation contain parameters to be calibrated — S102

Determine whether calibration enable conditions for the parameters to be calibrated are met based on a real-time state of a vehicle — S103

When the calibration enable conditions are met, iteratively update the parameters to be calibrated according to the measurement equation and the observation equation by using a preset extended Kalman filtering model, until convergence conditions for the parameters to be calibrated are met, to implement the calibration of the parameters to be calibrated — S104

*FIG. 1*

**Description**

**Technical Field**

The disclosure relates to the technical field of autonomous driving, and specifically provides a method for calibrating parameters of a sensor based on autonomous driving, an apparatus, a medium, and a vehicle.

**Background Art**

According to autonomous driving technologies for vehicles, information about a vehicle and information about a driving environment around the vehicle are obtained by a perception system and then analyzed, calculated and processed to implement autonomous driving of the vehicle. Therefore, in the autonomous driving technology, whether parameters of each sensor arranged on the vehicle are accurate is of great significance for the autonomous driving technology. In general, parameters of each sensor on a vehicle are calibrated offline before the vehicle leaves the factory. However, after the vehicle leaves the factory, the vehicle may be subjected to a change in tire pressure, etc. over time, which will then lead to deviations in actual parameters of vehicle sensors, especially external parameters. As a result, the parameters of the vehicle sensors need to be calibrated according to actual changes in the vehicle.

In the prior art, the parameters of the vehicle sensors are generally calibrated by means of offline calibration. However, there are complicated calibration processes during the offline calibration, which prolongs the time for the vehicle to leave the production line. Moreover, there is a limitation on external parameters to be calibrated in offline calibration. For example, only a yaw angle of an installation error of an IMU (Inertial Measurement Unit) can be calibrated, but a pitch angle thereof cannot be calibrated. Furthermore, there is a problem of large calibration errors in offline calibration. For example, for offline calibration of the IMU installation error, the offline calibration can only reach an accuracy of 0.3 deg, and there may be even larger calibration errors for some other parameters. In the prior art, there are also online calibration methods for parameters of a sensor, which can only allow for calibration of a few parameters and thus have a certain limitation.

Accordingly, there is a need for a new solution for calibrating parameters of a sensor based on autonomous driving to solve the above problems in the art.

Summary of the Disclosure

To overcome the above disadvantages, the disclosure is proposed to provide or at least partially provide a way to implement online calibration of a plurality of parameters of a sensor based on autonomous driving under the premise of ensuring the calibration accuracy.

In a first aspect, the disclosure provides a method for calibrating parameters of a sensor based on autonomous driving, the method being applied to a vehicle, and including:

establishing a measurement equation for the sensor based on an actual measurement state of the sensor;
establishing an observation equation for the sensor based on a transformation relationship between a sensor coordinate system for the sensor and an inertial measurement unit coordinate system for an inertial measurement unit, where the measurement equation and the observation equation contain parameters to be calibrated;
determining whether calibration enable conditions for the parameters to be calibrated are met based on a real-time state of the vehicle; and
when the calibration enable conditions are met, iteratively updating the parameters to be calibrated according to the measurement equation and the observation equation by using a preset extended Kalman filtering model, until convergence conditions for the parameters to be calibrated are met, to implement the calibration of the parameters to be calibrated.

In a technical solution of the above method for calibrating parameters of a sensor based on autonomous driving, the establishing a measurement equation for the sensor based on an actual measurement state of the sensor includes:

establishing the measurement equation for the sensor based on the actual measurement state of the sensor and a time delay between the sensor and the inertial measurement unit; and
the establishing an observation equation for the sensor based on a transformation relationship between a sensor coordinate system for the sensor and an inertial measurement unit coordinate system for an inertial measurement unit includes:
establishing the observation equation for the sensor based on the transformation relationship between the sensor coordinate system and the inertial measurement unit coordinate system and a transformation relationship between the inertial measurement unit coordinate system and a global coordinate system.

In a technical solution of the above method for calibrating parameters of a sensor based on autonomous driving, the sensor includes a GPS sensor, and the time delay includes a first time delay between the GPS sensor and the inertial measurement unit; and
the establishing the measurement equation for the sensor based on the actual measurement state of the sensor and a time delay between the sensor and the inertial measurement unit includes:

> obtaining a measurement position of the GPS sensor based on an actual measurement state of the GPS sensor, the first time delay, and a coordinate system offset of the GPS sensor;
> obtaining a measurement velocity of the GPS sensor based on the actual measurement state of the GPS sensor and the first time delay; and
> establishing a measurement equation for the GPS sensor based on the measurement position and the measurement velocity.

In a technical solution of the above method for calibrating parameters of a sensor based on autonomous driving, the establishing the observation equation for the sensor based on the transformation relationship between the sensor coordinate system and the inertial measurement unit coordinate system and a transformation relationship between the inertial measurement unit coordinate system and a global coordinate system includes:

> obtaining an observation position of the GPS sensor based on a transformation relationship between a GPS coordinate system for the GPS sensor and the inertial measurement unit coordinate system and a position of the inertial measurement unit in the global coordinate system;
> obtaining an observation velocity of the GPS sensor based on the transformation relationship between the GPS coordinate system and the inertial measurement unit coordinate system and a velocity of the inertial measurement unit in the global coordinate system;
> obtaining an observation yaw angle of the GPS sensor based on the transformation relationship between the GPS coordinate system and the inertial measurement unit coordinate system, a rotation matrix between the GPS coordinate system and the global coordinate system, and a rotation matrix between the inertial measurement unit coordinate system and the global coordinate system; and
> establishing an observation equation for the GPS sensor based on the observation position, the observation velocity, and the observation yaw angle.

In a technical solution of the above method for calibrating parameters of a sensor based on autonomous driving, the sensor includes a vehicle-mounted camera, and the time delay includes a second time delay between the vehicle-mounted camera and the inertial measurement unit; and
the establishing the measurement equation for the sensor based on the actual measurement state of the sensor and a time delay between the sensor and the inertial measurement unit includes:

> performing matching on a lane line in a high-precision map and a lane line photographed by the vehicle-mounted camera, to obtain an actual measurement state of a matching and positioning result;
> obtaining a location of the matching and positioning result in the global coordinate system based on the actual measurement state, the second time delay, and a local map offset of the high-precision map; and
> establishing a measurement equation for the vehicle-mounted camera based on a lateral location of the location.

In a technical solution of the above method for calibrating parameters of a sensor based on autonomous driving, the establishing the observation equation for the sensor based on the transformation relationship between the sensor coordinate system and the inertial measurement unit coordinate system and a transformation relationship between the inertial measurement unit coordinate system and a global coordinate system includes:

> obtaining an observation position of the vehicle-mounted camera based on a transformation relationship between an image coordinate system for the vehicle-mounted camera and the inertial measurement unit coordinate system and a position of the inertial measurement unit in the global coordinate system;
> obtaining an observation yaw angle of the vehicle-mounted camera based on the transformation relationship between the image coordinate system and the inertial measurement unit coordinate system and a rotation matrix between the inertial measurement unit coordinate system and the global coordinate system; and
> establishing an observation equation for the vehicle-mounted camera based on the observation position and the observation yaw angle.

In a technical solution of the above method for calibrating parameters of a sensor based on autonomous driving, the sensor includes a wheel speed sensor, and the time delay includes a third time delay between the wheel speed sensor and the inertial measurement unit; and
the establishing the measurement equation for the sensor based on the actual measurement state of the sensor and a time delay between the sensor and the inertial measurement unit includes:

> obtaining a rear axle center velocity for the wheel speed sensor based on an actual measurement state of the wheel speed sensor, a velocity coefficient of the wheel speed sensor, and the third time delay;
> obtaining a forward velocity in the rear axle center velocity based on the rear axle center velocity; and
> establishing a measurement equation for the wheel speed sensor based on the forward velocity.

In a technical solution of the above method for calibrating parameters of a sensor based on autonomous driving, the establishing the observation equation for the sensor based on the transformation relationship between the sensor coordinate system and the inertial measurement unit coordinate system and a transformation relationship between the inertial measurement unit coordinate system and a global coordinate system includes:

> obtaining an observation velocity of the wheel speed sensor based on a transformation relationship between a wheel velocity coordinate system for the wheel speed sensor and the inertial measurement unit coordinate system, a velocity of the inertial measurement unit in the global coordinate system, and a rotation matrix between the inertial measurement unit coordinate system and the global coordinate system; and
> establishing an observation equation for the wheel speed sensor based on the observation velocity.

In a technical solution of the above method for calibrating parameters of a sensor based on autonomous driving, the transformation relationship between the sensor coordinate system and the inertial measurement unit coordinate system includes a lever arm value and a rotation matrix between the sensor coordinate system and the inertial measurement unit coordinate system.

In a technical solution of the above method for calibrating parameters of a sensor based on autonomous driving, the rotation matrix between the sensor coordinate system and the inertial measurement unit coordinate system is obtained by the following step:
obtaining the rotation matrix between the sensor coordinate system and the inertial measurement unit coordinate system based on a rotation matrix between the sensor coordinate system and a rear axle offline installation coordinate system and an installation angle error of the sensor when modeled in the wheel velocity coordinate system.

In a technical solution of the above method for calibrating parameters of a sensor based on autonomous driving, the calibration enable conditions include a calibration precondition and calibration conditions for the parameters to be calibrated; and
the determining whether calibration enable conditions are met based on a real-time state of the vehicle includes:

> determining whether a global filter of an extended Kalman filter is already converged based on a real-time state of the inertial measurement unit;
> obtaining a duration of a signal with a quality higher than a preset signal quality threshold based on a signal quality for data acquisition by a GPS sensor;
> when the global filter is already converged and the duration is longer than a preset duration, determining that the calibration precondition is met; and
> when the calibration precondition is met, determining whether the calibration conditions for the parameters to be calibrated are met based on the real-time state of the vehicle.

In a technical solution of the above method for calibrating parameters of a sensor based on autonomous driving, the determining whether a global filter of an extended Kalman filter is already converged based on a real-time state of the inertial measurement unit includes:

> determining whether a state value of the inertial measurement unit is within a preset range, and if the state value of the inertial measurement unit is within the preset range, determining that a first convergence condition is met;
> determining whether a time delay of an accelerometer of the inertial measurement unit is converged and remains stable, and if the time delay of the accelerometer of the inertial measurement unit is converged and remains stable, determining that a second convergence condition is met;
> determining whether a yaw angle of the inertial measurement unit is consistent with a moving direction of the vehicle, and if the yaw angle of the inertial measurement unit is consistent with the moving direction of the vehicle, determining that a third convergence condition is met;

determining whether a pose of the inertial measurement unit is consistent with a pose of the sensor, and if the pose of the inertial measurement unit is consistent with the pose of the sensor, determining that a fourth convergence condition is met; and

when the first convergence condition, the second convergence condition, the third convergence condition, and the fourth convergence condition are all met, determining that the global filter of the extended Kalman filter is already converged.

In a technical solution of the above method for calibrating parameters of a sensor based on autonomous driving, the parameters to be calibrated include a time delay between the sensor and the inertial measurement unit;

a calibration condition for the time delay is as follows: a velocity of the vehicle is greater than a velocity threshold; and/or
the parameters to be calibrated include a lever arm value between the sensor coordinate system and the inertial measurement unit coordinate system;
a calibration condition for the lever arm value is as follows: a velocity of the vehicle is greater than a velocity threshold; and/or
the parameters to be calibrated include a wheel velocity coefficient of a wheel speed sensor; and
a calibration condition for the wheel velocity coefficient is as follows: a velocity of the vehicle is greater than a velocity threshold.

In a technical solution of the above method for calibrating parameters of a sensor based on autonomous driving, the time delay includes a first time delay between the GPS sensor and the inertial measurement unit, a second time delay between a vehicle-mounted camera and the inertial measurement unit, and a third time delay between the wheel speed sensor and the inertial measurement unit;

a convergence condition for the first time delay is as follows: a covariance of the first time delay is less than a preset percentage of an initial covariance, and a jitter of the first time delay within a preset time is less than a jitter threshold;
convergence conditions for the second time delay and the third time delay are as follows: the first time delay already meets the convergence condition, a covariance of the second time delay is less than a preset percentage of an initial covariance, and a jitter of the second time delay within a preset time is less than a jitter threshold;
a convergence condition for the third time delay is as follows: the first time delay already meets the convergence condition, a covariance of the third time delay is less than a preset percentage of an initial covariance, and a jitter of the third time delay within a preset time is less than a jitter threshold; and/or
a convergence condition for the lever arm value is as follows: a covariance of the lever arm value is less than a preset percentage of an initial covariance, and a jitter of the first time delay within a preset time is less than a jitter threshold; and/or
a convergence condition for the wheel velocity coefficient is as follows: a covariance of the wheel velocity coefficient is less than a preset percentage of an initial covariance, and a jitter of the first time delay within a preset time is less than a jitter threshold;
the preset percentage being less than one and greater than zero.

In a technical solution of the above method for calibrating parameters of a sensor based on autonomous driving, the parameters to be calibrated include an installation angle error of the sensor when modeled in a wheel velocity coordinate system, and the sensor includes the inertial measurement unit, the GPS sensor, and a vehicle-mounted camera; an installation angle error of the inertial measurement unit includes a pitch angle error and a yaw angle error, an installation angle error of the GPS sensor includes a yaw angle error, and an installation angle error of the vehicle-mounted camera includes a yaw angle error;

a calibration condition for the pitch angle error of the inertial measurement unit is as follows: a velocity of the vehicle is greater than a velocity threshold and the vehicle travels at a constant velocity in a straight line;
a calibration condition for the yaw angle error of the inertial measurement unit is as follows: a velocity of the vehicle is greater than a velocity threshold, an acceleration of the vehicle is greater than an acceleration threshold, and the vehicle travels in a straight line;
a calibration condition for the yaw angle error of the GPS sensor is as follows: a velocity of the vehicle is greater than a velocity threshold, and the calibration of the yaw angle error of the inertial measurement unit already meets a convergence condition; and/or
the parameters to be calibrated include a local map offset of the high-precision map; and
a calibration condition for the local map offset is as follows: a velocity of the vehicle is greater than a velocity threshold, and the vehicle-mounted camera obtains a high-quality matching and positioning result, where the high-quality matching and positioning result is determined based on a quality bit of data in the matching and positioning result.

In a technical solution of the above method for calibrating parameters of a sensor based on autonomous driving, a convergence condition for the pitch angle error of the inertial measurement unit is as follows: a covariance of the pitch angle error is less than a preset percentage of an initial covariance, and a jitter of the pitch angle error within a preset time is less than a jitter threshold;

a convergence condition for the yaw angle error of the inertial measurement unit is as follows: a covariance of the yaw angle error is less than a preset percentage of an initial covariance, and a jitter of the yaw angle error within a preset time is less than a jitter threshold;
a convergence condition for the yaw angle error of the GPS sensor is as follows: a covariance of the yaw angle error is less than a preset percentage of an initial covariance, a jitter of the yaw angle error within a preset time is less than a jitter threshold, and the yaw angle error of the inertial measurement unit already meets the convergence condition; and/or
a convergence condition for the local map offset is as follows: a covariance of the local map offset is less than a preset percentage of an initial covariance, and a jitter of the local map offset within a preset time is less than a jitter threshold;
the preset percentage being less than one and greater than zero.

In a technical solution of the above method for calibrating parameters of a sensor based on autonomous driving, the extended Kalman filtering model is obtained according to the following formulas:

$$y = z - h(x)$$

$$H = \frac{\partial h(x)}{\partial x}$$

$$K = \bar{P} H^T \left( H \overline{PH^T} + R \right)^{-1}$$

$$\nabla X = Ky$$

$$P = (1 - KH)\bar{P}(1 - KH)^T + KRK^T$$

where z is the measurement equation, h(x) is the observation equation, x is the parameter to be calibrated, y is a difference between the measurement equation and the observation equation, H is a Jacobian matrix in a current state, $\bar{H}$ is a Jacobian matrix in a previous state, K is a Kalman gain, $\bar{P}$ is a covariance matrix in the previous state, R is observation noise, OX is an observation calibration quantity, and P is a covariance matrix in the current state.
In a technical solution of the above method for calibrating parameters of a sensor based on autonomous driving, the method further includes:

when parameters to be calibrated of a GPS sensor are calibrated, obtaining the Jacobian matrix according to an observation equation for the GPS sensor by using a Lie algebraic solution method;
when parameters to be calibrated of a vehicle-mounted camera are calibrated, obtaining the Jacobian matrix according to an observation equation for the vehicle-mounted camera by using a Lie algebraic solution method; and
when parameters to be calibrated of a wheel speed sensor are calibrated, obtaining the Jacobian matrix according to an observation equation for the wheel speed sensor by using a Lie algebraic solution method or an Euler angle solution method.

In a second aspect, there is provided a control apparatus including at least one processor and a storage apparatus adapted to store a plurality of program codes, where the program codes are adapted to be loaded and executed by the at least one processor to perform the method for calibrating parameters of a sensor based on autonomous driving in any one of the technical solutions of the above method for calibrating parameters of a sensor based on autonomous driving.

In a third aspect, there is provided a computer-readable storage medium having a plurality of program codes stored therein, where the program codes are adapted to be loaded and executed by at least one processor to perform the method for calibrating parameters of a sensor based on autonomous driving in any one of the technical solutions of the above method for calibrating parameters of a sensor based on autonomous driving.

In a fourth aspect, there is provided a vehicle including a control apparatus in the technical solution of the above control apparatus and a sensor.

The above one or more technical solutions of the disclosure have at least one or more of the following beneficial effects:

In the technical solutions for implementing the disclosure, according to the disclosure, the calibration enable conditions for the parameters to be calibrated can be determined based on the real-time state of the vehicle, and when the calibration enable conditions for the parameters to be calibrated are met, the parameters to be calibrated that are contained in the measurement equation and the observation equation for the plurality of sensors may be iteratively updated using the extended Kalman filtering model, until the convergence conditions for the parameters to be calibrated are met. Through the above configuration, according to the disclosure, the plurality of parameters to be calibrated of the plurality of sensors can be calibrated online in real time, which takes the transformation relationship between each sensor and the inertial measurement unit into account, making the calibration process more accurate; moreover, the calibration process of the parameters to be calibrated can be dynamically enabled or disabled based on the real-time state of the vehicle, which takes the impact of the real-time state of the vehicle on the online calibration process into account, making the calibration process more robust.

## Brief Description of the Drawings

The disclosed content of the disclosure will become more readily understood with reference to the accompanying drawings. Those skilled in the art readily understand that these accompanying drawings are merely for illustrative purposes and are not intended to limit the scope of protection of the disclosure. In the drawings:

FIG. 1 is a schematic flowchart of main steps of a method for calibrating parameters of a sensor based on autonomous driving according to an embodiment of the disclosure; and
FIG. 2 is a schematic flowchart of main steps of a method for calibrating parameters of a sensor based on autonomous driving according to an implementation of an embodiment of the disclosure.

## Detailed Description of Embodiments

Some implementations of the disclosure are described below with reference to the accompanying drawings. Those skilled in the art should understand that these implementations are only used to explain the technical principles of the disclosure, and are not intended to limit the scope of protection of the disclosure.

In the description of the disclosure, a "module" or "processor" may include hardware, software, or a combination thereof. A module may include a hardware circuit, various suitable sensors, a communication port, and a memory, or may include a software part, for example, program code, or may be a combination of software and hardware. The at least one processor may be a central processing unit, a microprocessor, a digital signal processor, or any other suitable processor. The at least one processor has a data and/or signal processing function. The at least one processor may be implemented in software, hardware, or a combination thereof. A non-transitory computer-readable storage medium includes any suitable medium that may store program codes, for example, a magnetic disk, a hard disk, an optical disc, a flash memory, a read-only memory, or a random access memory. The term "A and/or B" indicates all possible combinations of A and B, for example, only A, only B, or A and B. The term "at least one of A or B" or "at least one of A and B" has a meaning similar to "A and/or B" and may include only A, only B, or A and B. The terms "a/an" and "this" in the singular form may also include the plural form.

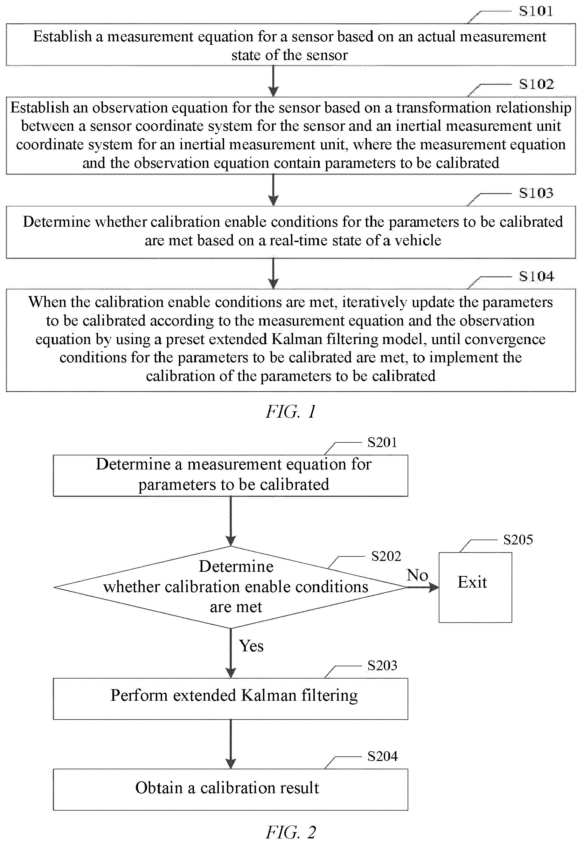

Referring to FIG. 1, FIG. 1 is a schematic flowchart of main steps of a method for calibrating parameters of a sensor based on autonomous driving according to an embodiment of the disclosure. As shown in FIG. 1, the method for calibrating parameters of a sensor based on autonomous driving in this embodiment of the disclosure is applied to a vehicle and mainly includes steps S 101 to S 104 below.

In step S101, A measurement equation for the sensor is established based on an actual measurement state of the sensor.

In this embodiment, the measurement equation for the sensor may be established based on the actual measurement state of the sensor.

In an implementation, the sensor may include: a positioning sensor, such as a GPS (Global Positioning System) sensor; a perception sensor, such as a vehicle-mounted camera; a wheel speed sensor, etc.

In step S102, an observation equation for the sensor is established based on a transformation relationship between a sensor coordinate system for the sensor and an inertial measurement unit coordinate system for an inertial measurement unit, where the measurement equation and the observation equation contain parameters to be calibrated.

In this embodiment, the observation equation for the sensor may be established based on the transformation relationship between the sensor coordinate system and the inertial measurement unit (IMU). The inertial measurement unit is a sensor configured to detect and measure an acceleration of the vehicle and a rotational motion. During the measurement made by the inertial measurement unit, data is updated at a high frequency without being affected by an external environment. Therefore, the establishment of the observation equation based on the transformation relationship between the sensor and the inertial measurement unit can enable the relationship between the sensor and the inertial measurement unit to be fully considered in the observation equation, improving the accuracy of the calibration process.

In an implementation, the plurality of parameters to be calibrated that are included in the measurement equation and the observation equation for the sensor may be calibrated.

In step S 103, whether calibration enable conditions for the parameters to be calibrated are met is determined based on a real-time state of the vehicle.

In this embodiment, whether the calibration of the parameters to be calibrated may be enabled may be determined based on the real-time state of the vehicle. In other words, during the calibration of the parameters to be calibrated, instead of enabling the calibration at any time, whether the calibration is enabled needs to be determined based on the real-time state of the vehicle, which fully takes the impact of the real-time state of the vehicle on the calibration process into account, making the calibration process more stable and improving the robustness of the calibration process.

In step S104, when the calibration enable conditions are met, the parameters to be calibrated are iteratively updated according to the measurement equation and the observation equation by using a preset extended Kalman filtering model, until convergence conditions for the parameters to be calibrated are met, to implement the calibration of the parameters to be calibrated.

In this embodiment, when the calibration enable conditions are met, the parameters to be calibrated may be iteratively updated according to the measurement equation and the observation equation for the sensor by using the extended Kalman filtering model, to make an observation result closer to a measurement result, so as to implement the calibration of the parameters to be calibrated; and when the convergence conditions for the parameters to be calibrated are met, the iterative update may stop. The use of the extended Kalman filtering model may implement the second-order Taylor series expansion of a nonlinear system with a higher precision.

Based on the above steps S 101 to S 104, according to the embodiments of the disclosure, the calibration enable conditions for the parameters to be calibrated can be determined based on the real-time state of the vehicle, and when the calibration enable conditions for the parameters to be calibrated are met, the parameters to be calibrated that are contained in the measurement equation and the observation equation for a plurality of sensors may be iteratively updated using the extended Kalman filtering model, until the convergence conditions for the parameters to be calibrated are met. Through the above configuration, according to the embodiments of the disclosure, the plurality of parameters to be calibrated of the plurality of sensors can be calibrated online in real time, which takes the transformation relationship between each sensor and the inertial measurement unit into account, making the calibration process more accurate; moreover, the calibration process of the parameters to be calibrated can be dynamically enabled or disabled based on the real-time state of the vehicle, which takes the impact of the real-time state of the vehicle on the online calibration process into account, making the calibration process more robust.

Steps S 101 to S 104 are further described below.

In an implementation of this embodiment of the disclosure, step S 101 may be further configured as the following step:

establishing the measurement equation for the sensor based on the actual measurement state of the sensor and a time delay between the sensor and the inertial measurement unit.

Step S 102 may be further configured as the following step:

establishing the observation equation for the sensor based on the transformation relationship between the sensor coordinate system and the inertial measurement unit coordinate system and a transformation relationship between the inertial measurement unit coordinate system and a global coordinate system.

In an implementation, the transformation relationship between the sensor coordinate system and the inertial measurement unit coordinate system may include a lever arm value and a rotation matrix between the sensor coordinate system and the inertial measurement unit coordinate system. The lever arm value refers to a vector from an origin of a coordinate system A to an origin of a coordinate system B during rigid motion (i.e., relative positions of the two always remain unchanged during the motion) of a same carrier in the coordinate system A and the coordinate system B. The rotation matrix refers to a rotation relationship in an attitude angle between the coordinate system A and the coordinate system B. When the sensor is installed on the vehicle, because the inertial measurement unit coordinate system cannot completely coincide with an axial direction of the sensor coordinate system for the sensor, the observation equation cannot be obtained by using an orientation of the inertial measurement unit coordinate system as an orientation of the sensor coordinate system. A position, a velocity, and an attitude angle observed by the sensor are transformed to the inertial measurement unit coordinate system and are then transformed from the inertial measurement unit coordinate system to the global coordinate system by using the lever arm value and the rotation matrix, such that a more accurate observation equation can be obtained.

In an implementation, the rotation matrix between the sensor coordinate system and the inertial measurement unit coordinate system is obtained by the following step:

obtaining the rotation matrix between the sensor coordinate system and the inertial measurement unit coordinate system based on a rotation matrix between the sensor coordinate system and a rear axle offline installation coordinate system and an installation angle error of the sensor when modeled in the wheel velocity coordinate system.

In an implementation, the sensor may include a GPS sensor, a vehicle-mounted camera, and a wheel speed sensor. The actual measurement state of the sensor may include an actual measurement position, an actual measurement velocity, an actual measurement acceleration, etc. of the sensor.

The steps of establishing a measurement equation and an observation equation for each of the GPS sensor, the vehicle-mounted camera, and the wheel speed sensor will be described below.

1. GPS sensor

The time delay includes a first time delay between the GPS sensor and the inertial measurement unit. The measurement equation for the GPS sensor may be established by steps S1011 to S1013 below.

In step S1011, a measurement position of the GPS sensor is obtained based on an actual measurement state of the GPS sensor, the first time delay, and a coordinate system offset of the GPS sensor.

In step S 1012, a measurement velocity of the GPS sensor is obtained based on the actual measurement state of the GPS sensor and the first time delay.

In step S1013, the measurement equation for the GPS sensor is established based on the measurement position and the measurement velocity.

In an implementation, the measurement equation for the GPS sensor may be obtained according to the following formula (1):

$$z_g =$$

$$\begin{bmatrix} {}_{gps}^{G}p_{measure} + {}_{gps}^{G}v_{measure} * time_{bias\_g} + 0.5 * acc_{gps} * time_{bias\_g}{}^2 - p_{offset\_gps} \\ {}_{gps}^{G}v_{measure} + acc_{gps} * time_{bias\_g} \\ 0_{1*1} \end{bmatrix}$$

$$(1)$$

where $z_g$ is the measurement equation for the GPS sensor, ${}_{gps}^{G}p_{measure}$ is an actual measurement position of the GPS sensor in the global coordinate system, ${}_{gps}^{G}v_{measure}$ is an actual measurement velocity of the GPS sensor in the global coordinate system, $acc_{gps}$ is an actual measurement acceleration of the GPS sensor in the global coordinate system, $time_{bias\_g}$ is the first time delay between the GPS sensor and the inertial measurement unit, and $p_{offset\_gps}$ is a coordinate system offset of the GPS sensor.

The coordinate system offset of the sensor may be caused by inconsistent epoch settings in different coordinate systems.

The observation equation for the GPS sensor may be obtained by steps S 1021 to S 1024 below.

In step S 1021, an observation position of the GPS sensor is obtained based on a transformation relationship between a GPS coordinate system for the GPS sensor and the inertial measurement unit coordinate system and a position of the inertial measurement unit in the global coordinate system.

In step S 1022, an observation velocity of the GPS sensor is obtained based on the transformation relationship between the GPS coordinate system and the inertial measurement unit coordinate system and a velocity of the inertial measurement unit in the global coordinate system.

In step S 1023, an observation yaw angle of the GPS sensor is obtained based on the transformation relationship between the GPS coordinate system and the inertial measurement unit coordinate system, a rotation matrix between the GPS coordinate system and the global coordinate system, and a rotation matrix between the inertial measurement unit coordinate system and the global coordinate system.

In step S 1024, the observation equation for the GPS sensor is established based on the observation position, the observation velocity, and the observation yaw angle.

In an implementation, the observation equation for the GPS sensor may be obtained according to the following formula (2):

$$h_g = \begin{bmatrix} {}^G_{gps}p & {}^G_{gps}v & \Lambda\theta \end{bmatrix} \quad (2)$$

where $h_g$ is the observation equation for the GPS sensor, ${}^G_{gps}p$ is the observation position of the GPS sensor, ${}^G_{gps}v$ is the observation velocity of the GPS sensor, and $\Lambda\theta$ is the observation yaw angle of the GPS sensor.

The observation position of the GPS sensor is obtained according to the following formula (3):

$$ {}^G_{gps}p = {}^G_I p + {}^G_I R * {}^I_{gps}p + n_p \quad (3)$$

where ${}^G_I p$ is the position of the inertial measurement unit in the global coordinate system, ${}^G_I R$ is a rotation matrix between the inertial measurement unit and the global coordinate system, ${}^I_{gps}p$ is a lever arm value between the GPS coordinate system and the inertial measurement unit coordinate system, and $n_p$ is position observation noise.

The observation velocity of the GPS sensor is obtained according to the following formula (4):

$$ {}^G_{gps}v = {}^G_I v + {}^G_I R * |w|_\times * {}^I_{gps}p + n_v \quad (4)$$

where ${}^G_I v$ is the velocity of the inertial measurement unit in the global coordinate system, $n_v$ is velocity observation noise, and $|w|_\times$ is an antisymmetric matrix of an angular velocity of the inertial measurement unit.

The observation yaw angle of the GPS sensor is obtained according to the following formula (5):

$$ \Lambda\theta = \Lambda LOG\left( {}^G_{gps}R * {}^I_{gps}R^T * {}^G_I R^T \right) \quad (5)$$

where $\Lambda = [0\ 0\ 1]$, $\theta$ is an attitude angle of the GPS sensor, *LOG* is an operation of transforming the observation yaw angle to a Lie algebraic space, ${}^G_{gps}R$ is the rotation matrix between the GPS coordinate system and the global coordinate system, ${}^I_{gps}R^T$ is a transpose of a rotation matrix between the GPS coordinate system and the inertial measurement unit coordinate system, ${}^G_I R^T$ is a transpose of the rotation matrix between the inertial measurement unit coordinate system and the global coordinate system . For the GPS sensor, because only the yaw angle in the attitude angle is relatively reliable, only a third dimension of $\theta$ is taken as the observation angle of the GPS sensor during operation of $\Lambda\theta$. The attitude angle includes a roll angle, a pitch angle, and the yaw angle, and the three angles represent angular relationships between three coordinate axes of the sensor coordinate system and three coordinate axes of the global coordinate system, respectively.

Further, the rotation matrix between the GPS coordinate system and the inertial measurement unit coordinate system may be obtained based on a rotation matrix between the GPS coordinate system and a rear axle offline installation coordinate system, an installation angle error of the GPS sensor when modeled in the wheel velocity coordinate system, and a rotation matrix between the wheel velocity coordinate system and the inertial measurement unit coordinate system according to the following formula (6):

$$\ _{gps}^{I}R = \ _{w}^{I}R * \ _{w}^{w'}R_{gps} * \ _{gps}^{w'}R \quad (6)$$

where $w'$ is the rear axle offline installation coordinate system, w is the wheel velocity coordinate system, $\ _{w}^{w'}R_{gps}$ is the installation angle error of the GPS sensor when modeled in the wheel velocity coordinate system, $\ _{gps}^{w'}R$ is the rotation matrix between the GPS coordinate system and the rear axle offline installation coordinate system, and $\ _{w}^{I}R$ is a rotation matrix between the wheel velocity coordinate system and the inertial measurement unit coordinate system. The wheel velocity coordinate system is a virtual coordinate system.

2. Vehicle-mounted camera

The time delay includes a second time delay between the vehicle-mounted camera and the inertial measurement unit. The measurement equation for the vehicle-mounted camera may be established by steps S 1014 to S 1016 below.
In step S 1014, matching is performed on a lane line in a high-precision map and a lane line photographed by the vehicle-mounted camera, to obtain an actual measurement state of a matching and positioning result.
In step S 1015, a location of the matching and positioning result in the global coordinate system is obtained based on the actual measurement state, the second time delay, and a local map offset of the high-precision map.
In step S 1016, a measurement equation for the vehicle-mounted camera is established based on a lateral location of the location.
In an implementation, the measurement equation for the vehicle-mounted camera is established according to the following formula (7):

$$z_m =$$
$$\left[ \begin{array}{c} \Lambda_1 R \left( \ _{m}^{G}p_{measure} + \ _{m}^{G}v_{measure} * time_{bias_m} + 0.5 * acc_m * time_{bias_m}{}^2 - p_{offset\_m} \right) \\ 0_{1*1} \end{array} \right]$$
$$(7)$$

where $z_m$ is the measurement equation for the vehicle-mounted camera, $\Lambda_1 = [0\ 1\ 0]$, $R = \ _{I}^{G}R^T$ is a rotation matrix of a reference point for matching and positioning, $\ _{m}^{G}p_{measure}$ is the location of the matching and positioning result in the global coordinate system, $p_{offset\_m}$ is the local map offset of the high-precision map, $time_{bias_m}$ is the second time delay between the vehicle-mounted camera and the inertial measurement unit, $\ _{m}^{G}p_{measure}$ is a position of the matching and positioning result, $\ _{m}^{G}v_{measure}$ is a velocity of the matching and positioning result, and $acc_m$ is an acceleration of the matching and positioning result.
During autonomous driving, a location of the vehicle is generally obtained by performing matching on an environmental image acquired by an environmental perception sensor, such as the vehicle-mounted camera, and the high-precision map. Position information of the lane line is annotated in the high-precision map. Through a result of lane line-based matching between the vehicle-mounted camera and the high-precision map, the measurement equation for the vehicle-mounted camera may be established according to formula (7). Because the lane line is generally parallel to the vehicle, only a lateral position of the matching and positioning result may be taken.

The observation equation for the vehicle-mounted camera may be obtained by steps S 1025 to S 1027 below.

In step S 1025, an observation position of the vehicle-mounted camera is obtained based on a transformation relationship between an image coordinate system for the vehicle-mounted camera and the inertial measurement unit coordinate system and a position of the inertial measurement unit in the global coordinate system.

In step S 1026, an observation yaw angle of the vehicle-mounted camera is obtained based on the transformation relationship between the image coordinate system and the inertial measurement unit coordinate system and a rotation matrix between the inertial measurement unit coordinate system and the global coordinate system.

In step S 1027, an observation equation for the vehicle-mounted camera is established based on the observation position and the observation yaw angle.

In an implementation, the observation equation for the vehicle-mounted camera may be obtained according to the following formula (8):

$$h_m = \begin{bmatrix} \Lambda_1 R * {}_m^G p & \theta_2 \end{bmatrix} \quad (8)$$

where $h_m$ is the observation equation for the vehicle-mounted camera, ${}_m^G p$ is the observation position of the vehicle-mounted camera, and $\theta_2$ is the observation yaw angle of the vehicle-mounted camera.

The observation position of the vehicle-mounted camera may be obtained according to the following formula (9):

$$ {}_m^G p = {}_I^G p + {}_I^G R * {}_m^I p \quad (9) $$

where ${}_I^G p$ is the position of the inertial measurement unit in the global coordinate system, ${}_I^G R$ is the rotation matrix between the inertial measurement unit coordinate system and the global coordinate system, and ${}_m^I p$ is a lever arm value between the image coordinate system and the inertial measurement unit coordinate system.

The observation yaw angle of the vehicle-mounted camera may be obtained according to the following formula (10):

$$\theta_2 = \Lambda_2 LOG\left({}_m^G R * {}_m^I R^T * {}_I^G R^T\right) \quad (10)$$

where $\Lambda_2 = [0\ 0\ 1]$, $LOG$ is an operation of transforming the observation yaw angle to the Lie algebraic space, ${}_m^G R$ is a rotation matrix between the image coordinate system and the global coordinate system, ${}_m^I R^T$ is a transpose of a rotation matrix between the image coordinate system and the inertial measurement unit coordinate system, and ${}_I^G R^T$ is a transpose of the rotation matrix between the inertial measurement unit coordinate system and the global coordinate system.

Further, the rotation matrix between the image coordinate system and the inertial measurement unit coordinate system may be obtained based on a rotation matrix between the image coordinate system and a rear axle offline installation coordinate system, an installation angle error of the vehicle-mounted camera when modeled in the wheel velocity coordinate system, and a rotation matrix between the wheel velocity coordinate system and the inertial measurement unit coordinate system according to the following formula (11):

$$_m^I R = {}_w^I R * {}_w^{w'} R_m * {}_m^{w'} R \quad (11)$$

where w' is the rear axle offline installation coordinate system, w is the wheel velocity coordinate system, ${}_w^{w'} R_m$ is the installation angle error of the vehicle-mounted camera when modeled in the wheel velocity coordinate system, ${}_m^{w'} R$ is the rotation matrix between the image coordinate system and the rear axle offline installation coordinate system, and ${}_w^I R$ is the rotation matrix between the wheel velocity coordinate system and the inertial measurement unit coordinate system.

3. Wheel speed sensor

The time delay may include a third time delay between the wheel speed sensor and the inertial measurement unit. The measurement equation for the wheel speed sensor may be established by steps S 1017 to S 1019 below.

In step S1017, a rear axle center velocity for the wheel speed sensor is obtained based on an actual measurement state of the wheel speed sensor, a velocity coefficient of the wheel speed sensor, and the third time delay.

In step S1018, a forward velocity in the rear axle center velocity is obtained based on the rear axle center velocity.

In step S1019, the measurement equation for the wheel speed sensor is established based on the forward velocity.

In an implementation, the measurement equation for the wheel speed sensor may be obtained according to the following formula (12):

$$z_w = [speed \quad 0 \quad 0]^T * scale + acc_{wheel} * time_{bias\_w} \quad (12)$$

where $z_w$ is the measurement equation for the wheel speed sensor, *speed* is the forward velocity of a center of a rear axle, *scale* is the velocity coefficient of the wheel speed sensor, $acc_{wheel}$ is an acceleration of the center of the rear axle, and $time_{bias\_w}$ is the third time delay between the wheel speed sensor and the inertial measurement unit.

The observation equation for the wheel speed sensor may be obtained by steps S 1028 and S 1029 below.

In step S 1028, an observation velocity of the wheel speed sensor is obtained based on a transformation relationship between a wheel velocity coordinate system for the wheel speed sensor and the inertial measurement unit coordinate system, a velocity of the inertial measurement unit in the global coordinate system, and a rotation matrix between the inertial measurement unit coordinate system and the global coordinate system.

In step S 1029, the observation equation for the wheel speed sensor is established based on the observation velocity.

In an implementation, the observation equation for the wheel speed sensor is obtained according to the following formula (13):

$$h_w = \Lambda * ({}_w^I R * {}_I^G R^T * ({}_I^G v + {}_I^G R * [w]_\times * {}_w^I p)) + n_v \quad (13)$$

where $h_w$ is the observation equation for the wheel speed sensor, $\Lambda = [1\ 0\ 0]$, ${}_w^I R$ is the rotation matrix between the wheel velocity coordinate system and the inertial measurement unit coordinate system, ${}_I^G R^T$ is a transpose of the rotation matrix between the inertial measurement unit coordinate system and the global coordinate system, ${}_I^G v$ is the velocity of the inertial measurement unit in the global coordinate system, ${}_I^G R$ is the rotation matrix between the inertial measurement unit coordinate system and the global coordinate system, $[w]_\times$ is an antisymmetric matrix of an angular velocity of the inertial measurement unit, $_w^I p$ is a lever arm value between the wheel velocity coordinate system and the inertial measurement unit coordinate system, and $n_v$ is wheel velocity noise of the wheel speed sensor.

Further, a rotation matrix between the wheel speed sensor and the inertial measurement unit may be obtained based on a rotation matrix between the wheel speed sensor and the rear axle offline installation coordinate system and an installation angle error of the sensor when modeled in the wheel velocity coordinate system according to the following formula (14):

$$_w^I R = {}_{w'}^I R * {}_w^{w'} R \quad (14)$$

where w' is the rear axle offline installation coordinate system, w is the wheel velocity coordinate system, $_w^{w'} R$ is the installation angle error of the wheel speed sensor, $_{w'}^I R$ is a rotation matrix between the rear axle offline installation coordinate system and the inertial measurement unit coordinate system, and $_w^I R$ is the rotation matrix between the wheel velocity coordinate system and the inertial measurement unit coordinate system.

In an implementation of this embodiment of the disclosure, the calibration enable conditions may include a calibration precondition and calibration conditions for the parameters to be calibrated. Step S103 may further include steps S 1031 to S 1034 below.

In step S1031, whether a global filter of a Kalman filter is already converged is determined based on a real-time state of the inertial measurement unit.

In this implementation, step S1031 may further include steps S10311 to S 10315 below.

In step S 10311, whether a state value of the inertial measurement unit is within a preset range is determined, and if the state value of the inertial measurement unit is within the preset range, it is determined that a first convergence condition is met.

In this implementation, whether the first convergence condition is met may be determined based on the state value of the inertial measurement unit. Thresholds may be set for different state values to determine whether the state values are within reasonable ranges based on the thresholds. For example, longitude and latitude thresholds of the vehicle are 180°, that is to say, the longitude and latitude of the vehicle will not exceed 180°. If all the state values are within their corresponding preset ranges, it may be determined that the first convergence condition is met.

In step S10312, whether a time delay of an accelerometer of the inertial measurement unit is converged and remains stable is determined, and if the time delay of the accelerometer of the inertial measurement unit is converged and remains stable, it is determined that a second convergence condition is met.

In this implementation, whether the time delay of the accelerometer of the inertial measurement unit is already converged may be determined, and if the time delay of the accelerometer of the inertial measurement unit is already converged, it may be determined that the second convergence condition is met.

In step S10313, whether a yaw angle of the inertial measurement unit is consistent with a moving direction of the vehicle is determined, and if the yaw angle of the inertial measurement unit is consistent with the moving direction of the vehicle, it is determined that a third convergence condition is met.

In this implementation, whether the yaw angle of the inertial measurement unit is consistent with the moving direction of the vehicle may be determined, and if the yaw angle of the inertial measurement unit is consistent with the moving direction of the vehicle, it may be determined that the third convergence condition is met.

In step S10314, whether a pose of the inertial measurement unit is consistent with a pose of the sensor is determined, and if the pose of the inertial measurement unit is consistent with the pose of the sensor, it is determined that a fourth convergence condition is met.

In this implementation, whether the pose of the inertial measurement unit is consistent with the pose of the sensor may be determined, and if the pose of the inertial measurement unit is consistent with the pose of the sensor, it may be determined that the fourth convergence condition is met. The sensor may include the vehicle-mounted camera and the GPS sensor.

In step S10315, when the first convergence condition, the second convergence condition, the third convergence condition, and the fourth convergence condition are all met, it is determined that the global filter of the extended Kalman filter is already converged.

In this implementation, the calibration can be performed only when the global filter of the Kalman filter is already converged. Whether the global filter is already converged may be determined based on the first convergence condition, the second convergence condition, the third convergence condition, and the fourth convergence condition. The global filter is configured to represent a positioning state of the inertial measurement unit. The parameters to be calibrated of the sensor to be calibrated can be calibrated only when the positioning state of the inertial measurement unit is of a good quality.

In an implementation, a Jacobian matrix of the inertial measurement unit may be obtained by means of deriving the observation equation for each sensor to be calibrated based on the parameters of the inertial measurement unit, and whether the global filter is already converged may be determined based on the Jacobian matrix.

In step S1032, a duration of a signal with a quality higher than a preset signal quality threshold is obtained based on a signal quality for data acquisition by a GPS sensor.

In this implementation, a duration of a GPS signal with a better quality may be obtained based on the signal quality for acquisition by the GPS sensor. The quality of the GPS signal may be determined by a signal intensity of the GPS signal. If the signal intensity is higher than the preset signal quality threshold, the GPS signal may be considered to have a better quality.

In step S1033, when the global filter is already converged and the duration is longer than a preset duration, it is determined that the calibration precondition is met.

In this implementation, when the global filter is already converged and the duration of the GPS signal with the better quality is longer than the preset duration, it may be considered that the calibration precondition is currently met.

In step S1034, when the calibration precondition is met, whether the calibration conditions for the parameters to be calibrated are met is determined based on the real-time state of the vehicle.

In this embodiment, when the calibration precondition is met, whether the calibration conditions for the parameters to be calibrated are met may be determined based on the real-time state of the vehicle. Specifically, the parameters to be calibrated include a time delay between the sensor and the inertial measurement unit, a lever arm value between the sensor coordinate system and the inertial measurement unit coordinate system, and a wheel velocity coefficient of the wheel speed sensor.

A calibration condition for the time delay is as follows: a velocity of the vehicle is greater than a velocity threshold;

a calibration condition for the lever arm value is as follows: a velocity of the vehicle is greater than a velocity threshold; and

a calibration condition for the wheel velocity coefficient is as follows: a velocity of the vehicle is greater than a velocity threshold.

In an implementation, the velocity threshold may be 3 m/s.

In an implementation, the time delay may include a first time delay between the GPS sensor and the inertial measurement unit, a second time delay between the vehicle-mounted camera and the inertial measurement unit, and a third time delay between the wheel speed sensor and the inertial measurement unit.

A convergence condition for the first time delay is as follows: a covariance of the first time delay is less than a preset percentage of an initial covariance, and a jitter of the first time delay within a preset time is less than a jitter threshold.

Convergence conditions for the second time delay and the third time delay are as follows: the first time delay already meets the convergence condition, a covariance of the second time delay is less than a preset percentage of an initial covariance, and a jitter of the second time delay within a preset time is less than a jitter threshold.

A convergence condition for the third time delay is as follows: the first time delay already meets the convergence condition, a covariance of the third time delay is less than a preset percentage of an initial covariance, and a jitter of the third time delay within a preset time is less than a jitter threshold.

In an implementation, a convergence condition for the lever arm value is as follows: a covariance of the lever arm value is less than a preset percentage of an initial covariance, and a jitter of the first time delay within a preset time is less than a jitter threshold.

In an implementation, a convergence condition for the wheel velocity coefficient is as follows: a covariance of the wheel velocity coefficient is less than a preset percentage of an initial covariance, and a jitter of the first time delay within a preset time is less than a jitter threshold. The preset percentage is less than one and greater than zero.

In an implementation, the preset percentage may be 10%.

In an implementation, the parameters to be calibrated may include an installation angle error of the sensor when modeled in a wheel velocity coordinate system, and the sensor includes the inertial measurement unit, the GPS sensor, and the vehicle-mounted camera. An installation angle error of the inertial measurement unit includes a pitch angle error and a yaw angle error, an installation angle error of the GPS sensor includes a yaw angle error, and an installation angle error of the vehicle-mounted camera includes a yaw angle error.

A calibration condition for the pitch angle error of the inertial measurement unit is as follows: a velocity of the vehicle is greater than a velocity threshold and the vehicle travels at a constant velocity in a straight line.

A calibration condition for the yaw angle error of the inertial measurement unit is as follows: a velocity of the vehicle is greater than a velocity threshold, an acceleration of the vehicle is greater than an acceleration threshold, and the vehicle travels in a straight line.

A calibration condition for the yaw angle error of the GPS sensor is as follows: a velocity of the vehicle is greater than a velocity threshold, and the calibration of the yaw angle error of the inertial measurement unit already meets a convergence condition.

In an implementation, the parameters to be calibrated include a local map offset of the high-precision map.

A calibration condition for the local map offset is as follows: a velocity of the vehicle is greater than a velocity threshold, and the vehicle-mounted camera obtains a high-quality matching and positioning result, where the high-quality matching and positioning result is determined based on a quality bit of data in the matching and positioning result.

In an implementation, the velocity threshold is 3 m/s, and the acceleration threshold is 0.2 m/s.

In an implementation, a convergence condition for the pitch angle error of the inertial measurement unit is as follows: a covariance of the pitch angle error is less than a preset percentage of an initial covariance, and a jitter of the pitch angle error within a preset time is less than a jitter threshold.

A convergence condition for the yaw angle error of the inertial measurement unit is as follows: a covariance of the yaw angle error is less than a preset percentage of an initial covariance, and a jitter of the yaw angle error within a preset time is less than a jitter threshold.

A convergence condition for the yaw angle error of the GPS sensor is as follows: a covariance of the yaw angle error is less than a preset percentage of an initial covariance, a jitter of the yaw angle error within a preset time is less than a jitter threshold, and the yaw angle error of the inertial measurement unit already meets the convergence condition.

A convergence condition for the local map offset is as follows: a covariance of the local map offset is less than a preset percentage of an initial covariance, and a jitter of the local map offset within a preset time is less than a jitter threshold. The preset percentage is less than one and greater than zero. Those skilled in the art may set the jitter threshold and the preset percentage according to requirements of a practical application.

In an implementation, the preset percentage may be 10%.

In an implementation of this embodiment of the disclosure, the extended Kalman filtering model is obtained according to the following formulas (15) to (19):

$$y = z - h(x) \quad (15)$$

$$H = \frac{\partial h(x)}{\partial x} \quad (16)$$

$$K = \bar{P}H^T\big(H\overline{PH^T} + R\big)^{-1} \quad (17)$$

$$\nabla X = Ky \quad (18)$$

$$P = (1 - KH)\bar{P}(1 - KH)^T + KRK^T \quad (19)$$

where z is the measurement equation, h(x) is the observation equation, x is the parameter to be calibrated, y is a difference between the measurement equation and the observation equation, H is a Jacobian matrix in a current state, $\bar{H}$ is a Jacobian matrix in a previous state, K is a Kalman gain, $\bar{P}$ is a covariance matrix in the previous state, R is observation noise, OX is an observation calibration quantity, and P is a covariance matrix in the current state.

In other words, the measurement equation and the observation equation for the above sensor may be substituted into the extended Kalman filtering model, such that the Jacobian matrix may be calculated base on the observation equation, the Kalman gain may be updated base on the Jacobian matrix and the covariance matrix, the observation calibration quantity may be updated base on the Kalman gain and a difference between a measurement and an observation, and the parameters to be calibrated may be updated base on the observation calibration quantity. Through continuous iterative update, the observation is gradually close to the measurement, to implement the calibration of the parameters to be calibrated. The use of the covariance matrix during the iterative update can implement the estimation of multi-dimensional variables, to meet the requirement of simultaneously calibrating the plurality of parameters to be calibrated. Meanwhile, the process of performing the iterative update by using the extended Kalman filtering model does not affect a running state of the vehicle, thus meeting the requirement of real-time calibration at a vehicle side.

In an implementation, when parameters to be calibrated, such as $time_{bias\_g}$, $^{w'}_{w}R_{gps}$, $^{I}_{gps}p$, and $p_{offset\_gps}$, of a GPS sensor are calibrated, the Jacobian matrix may be obtained according to an observation equation for the GPS sensor by using a Lie algebraic solution method. Obtaining the Jacobian matrix by using the Lie algebraic solution method can avoid the problem of gimbal lock in an Euler angle solution method that is caused when a rotation angle exceeds 90°.

When parameters to be calibrated, such as $time_{bias_m}$, $p_{offset\_m}$, $^{w'}_{w}R_{m}$, and $^{I}_{m}p$, of a vehicle-mounted camera are calibrated, the Jacobian matrix may be obtained according to an observation equation for the vehicle-mounted camera by using the Lie algebraic solution method.

When parameters to be calibrated of a wheel speed sensor are calibrated, the Jacobian matrix may be obtained according to an observation equation for the wheel speed sensor by using the Lie algebraic solution method or the Euler angle solution method.

When the Jacobian matrix is obtained by using the Lie algebraic solution method, the parameters to be calibrated, such as $scale$, $time_{bias\_w}$, $^{w'}_{w}R$, and $^{I}_{w}p$, may be calibrated. $^{w'}_{w}R$ may be represented by using the following formula (20):

$$^{w'}_{w}R = R_{\delta yaw}R_{\delta pitch}R_{\delta roll} \quad (20)$$

where $R_{\delta yaw}$ is a yaw angle error, $R_{\delta pitch}$ is a pitch angle error, and $R_{\delta roll}$ is a roll angle error.

When the Jacobian matrix is obtained by using the Euler angle solution method, the parameters to be calibrated, such as $scale$, $time_{bias\_w}$, $R_{\delta yaw}$, $R_{\delta pitch}$, $R_{\delta roll}$, and $^{I}_{w}p$, may be calibrated.

In an implementation, reference may be made to FIG. 2. FIG. 2 is a schematic flowchart of main steps of a method for calibrating parameters of a sensor based on autonomous driving according to an implementation of an embodiment of the disclosure. As shown in FIG. 2, the method for calibrating parameters of a sensor based on autonomous driving may include steps S201 to S205 below.

In step S201, a measurement equation for parameters to be calibrated is determined.

In this implementation, step S201 is similar to the above step S101, and will not be described in detail herein again for ease of description.

In step S202, whether calibration enable conditions are met is determined; if the calibration enable conditions are met, step S203 is performed; or if the calibration enable conditions are not met, step S205 is performed.

In this implementation, step S202 is similar to the above step S103, and will not be described in detail herein again for ease of description.

In step S203, extended Kalman filtering is performed.

In this implementation, step S203 is similar to the above step S104, and will not be described in detail herein again for ease of description.

In step S204, a calibration result is obtained.

In this implementation, the parameters to be calibrated may be calibrated through extended Kalman filtering to obtain the calibration result.

In step S205, the process exits.

In this implementation, when calibration conditions are not met, the calibration process may exit first.

It should be noted that, although the steps are described in a specific order in the above embodiments, those skilled in the art may understand that in order to implement the effects of the disclosure, different steps are not necessarily performed in such an order, but may be performed simultaneously (in parallel) or in other orders, and these changes shall all fall within the scope of protection of the disclosure.

Those skilled in the art can understand that all or some of the procedures in the method of the above embodiment of the disclosure may also be implemented by a computer program instructing relevant hardware. The computer program may be stored in a computer-readable storage medium, and when the computer program is executed by at least one processor, the steps of the above method embodiments may be implemented. The computer program includes computer program codes, which may be in a source code form, an object code form, an executable file form, some intermediate forms, or the like. The computer-readable storage medium may include: any entity or apparatus that can carry the computer program code, such as a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides a control apparatus. In an embodiment of the control apparatus according to the disclosure, the control apparatus includes at least one processor and a storage apparatus. The storage apparatus may be configured to store a program for executing the method for calibrating parameters of a sensor based on autonomous driving in the above method embodiments. The at least one processor may be configured to execute a program in the storage apparatus, where the program includes, but is not limited to, the program for executing the method for calibrating parameters of a sensor based on autonomous driving in the above method embodiments. For ease of description, only parts related to the embodiments of the disclosure are shown. For specific technical details that are not disclosed, reference may be made to the method part of the embodiments of the disclosure. The control apparatus may be a control apparatus formed by various electronic devices.

Further, the disclosure further provides a computer-readable storage medium. In an embodiment of the computer-readable storage medium according to the disclosure, the computer-readable storage medium may be configured to store a program for executing the method for calibrating parameters of a sensor based on autonomous driving in the above method embodiments, where the program may be loaded and executed by at least one processor to implement the above method for calibrating parameters of a sensor based on autonomous driving. For ease of description, only parts related to the embodiments of the disclosure are shown. For specific technical details that are not disclosed, reference may be made to the method part of the embodiments of the disclosure. The computer-readable storage medium may be a storage apparatus formed by various electronic devices. Optionally, the computer-readable storage medium in the embodiment of the disclosure is a non-transitory computer-readable storage medium.

Further, the disclosure further provides a vehicle. In an embodiment of the vehicle according to the disclosure, the vehicle includes a control apparatus in the above embodiment of the control apparatus and a sensor.

Further, it should be understood that, because the configuration of modules is merely intended to illustrate function units of the apparatus in the disclosure, physical devices corresponding to these modules may be at least one processor itself, or part of software, part of hardware, or part of a combination of software and hardware in the at least one processor. Therefore, the number of modules in the figure is merely schematic.

Those skilled in the art can understand that the modules in the apparatus may be adaptively split or merged. Such a split or combination of specific modules does not cause the technical solutions to depart from the principle of the disclosure. Therefore, technical solutions after any such split or combination shall all fall within the scope of protection of the disclosure.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art may make equivalent changes or substitutions to the related technical features without departing from the principle of the disclosure, and all the technical solutions with such changes or substitutions shall fall within the scope of protection of the disclosure.

**Claims**

1. A method for calibrating parameters of a sensor based on autonomous driving, the method being applied to a vehicle, and comprising:

   establishing a measurement equation for the sensor based on an actual measurement state of the sensor;
   establishing an observation equation for the sensor based on a transformation relationship between a sensor coordinate system for the sensor and an inertial measurement unit coordinate system for an inertial measurement unit, wherein the measurement equation and the observation equation contain parameters to be calibrated;
   determining whether calibration enable conditions for the parameters to be calibrated are met based on a real-time state of the vehicle; and
   when the calibration enable conditions are met, iteratively updating the parameters to be calibrated according to the measurement equation and the observation equation by using a preset extended Kalman filtering model, until convergence conditions for the parameters to be calibrated are met, to implement the calibration of the parameters to be calibrated.

2. The method for calibrating parameters of a sensor based on autonomous driving according to claim 1, wherein the establishing a measurement equation for the sensor based on an actual measurement state of the sensor comprises:

establishing the measurement equation for the sensor based on the actual measurement state of the sensor and a time delay between the sensor and the inertial measurement unit; and

the establishing an observation equation for the sensor based on a transformation relationship between a sensor coordinate system for the sensor and an inertial measurement unit coordinate system for an inertial measurement unit comprises:

establishing the observation equation for the sensor based on the transformation relationship between the sensor coordinate system and the inertial measurement unit coordinate system and a transformation relationship between the inertial measurement unit coordinate system and a global coordinate system.

3. The method for calibrating parameters of a sensor based on autonomous driving according to claim 2, wherein the sensor comprises a GPS sensor, and the time delay comprises a first time delay between the GPS sensor and the inertial measurement unit; and

the establishing the measurement equation for the sensor based on the actual measurement state of the sensor and a time delay between the sensor and the inertial measurement unit comprises:

obtaining a measurement position of the GPS sensor based on an actual measurement state of the GPS sensor, the first time delay, and a coordinate system offset of the GPS sensor;

obtaining a measurement velocity of the GPS sensor based on the actual measurement state of the GPS sensor and the first time delay; and

establishing a measurement equation for the GPS sensor based on the measurement position and the measurement velocity.

4. The method for calibrating parameters of a sensor based on autonomous driving according to claim 2 or 3, wherein the establishing the observation equation for the sensor based on the transformation relationship between the sensor coordinate system and the inertial measurement unit coordinate system and a transformation relationship between the inertial measurement unit coordinate system and a global coordinate system comprises:

obtaining an observation position of the GPS sensor based on a transformation relationship between a GPS coordinate system for the GPS sensor and the inertial measurement unit coordinate system and a position of the inertial measurement unit in the global coordinate system;

obtaining an observation velocity of the GPS sensor based on the transformation relationship between the GPS coordinate system and the inertial measurement unit coordinate system and a velocity of the inertial measurement unit in the global coordinate system;

obtaining an observation yaw angle of the GPS sensor based on the transformation relationship between the GPS coordinate system and the inertial measurement unit coordinate system, a rotation matrix between the GPS coordinate system and the global coordinate system, and a rotation matrix between the inertial measurement unit coordinate system and the global coordinate system; and

establishing an observation equation for the GPS sensor based on the observation position, the observation velocity, and the observation yaw angle.

5. The method for calibrating parameters of a sensor based on autonomous driving according to any one of claims 2 to 4, wherein the sensor comprises a vehicle-mounted camera, and the time delay comprises a second time delay between the vehicle-mounted camera and the inertial measurement unit; and

the establishing the measurement equation for the sensor based on the actual measurement state of the sensor and a time delay between the sensor and the inertial measurement unit comprises:

performing matching on a lane line in a high-precision map and a lane line photographed by the vehicle-mounted camera, to obtain an actual measurement state of a matching and positioning result;

obtaining a location of the matching and positioning result in the global coordinate system based on the actual measurement state, the second time delay, and a local map offset of the high-precision map; and

establishing a measurement equation for the vehicle-mounted camera based on a lateral location of the location.

6. The method for calibrating parameters of a sensor based on autonomous driving according to any one of claims 2 to 5, wherein the sensor comprises a wheel speed sensor, and the time delay comprises a third time delay between the wheel speed sensor and the inertial measurement unit; and
the establishing the measurement equation for the sensor based on the actual measurement state of the sensor and a time delay between the sensor and the inertial measurement unit comprises:

obtaining a rear axle center velocity for the wheel speed sensor based on an actual measurement state of the wheel speed sensor, a velocity coefficient of the wheel speed sensor, and the third time delay;
obtaining a forward velocity in the rear axle center velocity based on the rear axle center velocity; and
establishing a measurement equation for the wheel speed sensor based on the forward velocity.

7. The method for calibrating parameters of a sensor based on autonomous driving according to any one of claims 1 to 6, wherein
the transformation relationship between the sensor coordinate system and the inertial measurement unit coordinate system comprises a lever arm value and a rotation matrix between the sensor coordinate system and the inertial measurement unit coordinate system.

8. The method for calibrating parameters of a sensor based on autonomous driving according to any one of claims 1 to 7, wherein the calibration enable conditions comprise a calibration precondition and calibration conditions for the parameters to be calibrated; and
the determining whether calibration enable conditions are met based on a real-time state of the vehicle comprises:

determining whether a global filter of an extended Kalman filter is already converged based on a real-time state of the inertial measurement unit;
obtaining a duration of a signal with a quality higher than a preset signal quality threshold based on a signal quality for data acquisition by a GPS sensor;
when the global filter is already converged and the duration is longer than a preset duration, determining that the calibration precondition is met; and
when the calibration precondition is met, determining whether the calibration conditions for the parameters to be calibrated are met based on the real-time state of the vehicle.

9. The method for calibrating parameters of a sensor based on autonomous driving according to claim 8, wherein the determining whether a global filter of an extended Kalman filter is already converged based on a real-time state of the inertial measurement unit comprises:

determining whether a state value of the inertial measurement unit is within a preset range, and if the state value of the inertial measurement unit is within the preset range, determining that a first convergence condition is met;
determining whether a time delay of an accelerometer of the inertial measurement unit is converged and remains stable, and if the time delay of the accelerometer of the inertial measurement unit is converged and remains stable, determining that a second convergence condition is met;
determining whether a yaw angle of the inertial measurement unit is consistent with a moving direction of the vehicle, and if the yaw angle of the inertial measurement unit is consistent with the moving direction of the vehicle, determining that a third convergence condition is met;
determining whether a pose of the inertial measurement unit is consistent with a pose of the sensor, and if the pose of the inertial measurement unit is consistent with the pose of the sensor, determining that a fourth convergence condition is met; and
when the first convergence condition, the second convergence condition, the third convergence condition, and the fourth convergence condition are all met, determining that the global filter of the extended Kalman filter is already converged.

10. The method for calibrating parameters of a sensor based on autonomous driving according to claim 8 or 9, wherein the parameters to be calibrated comprise a time delay between the sensor and the inertial measurement unit;

a calibration condition for the time delay is as follows: a velocity of the vehicle is greater than a velocity threshold; and/or
the parameters to be calibrated comprise a lever arm value between the sensor coordinate system and the inertial measurement unit coordinate system;

a calibration condition for the lever arm value is as follows: a velocity of the vehicle is greater than a velocity threshold; and/or
the parameters to be calibrated comprise a wheel velocity coefficient of a wheel speed sensor; and
a calibration condition for the wheel velocity coefficient is as follows: a velocity of the vehicle is greater than a velocity threshold.

11. The method for calibrating parameters of a sensor based on autonomous driving according to claim 10, wherein the time delay comprises a first time delay between the GPS sensor and the inertial measurement unit, a second time delay between a vehicle-mounted camera and the inertial measurement unit, and a third time delay between the wheel speed sensor and the inertial measurement unit;

a convergence condition for the first time delay is as follows: a covariance of the first time delay is less than a preset percentage of an initial covariance, and a jitter of the first time delay within a preset time is less than a jitter threshold;
convergence conditions for the second time delay and the third time delay are as follows: the first time delay already meets the convergence condition, a covariance of the second time delay is less than a preset percentage of an initial covariance, and a jitter of the second time delay within a preset time is less than a jitter threshold;
a convergence condition for the third time delay is as follows: the first time delay already meets the convergence condition, a covariance of the third time delay is less than a preset percentage of an initial covariance, and a jitter of the third time delay within a preset time is less than a jitter threshold; and/or
a convergence condition for the lever arm value is as follows: a covariance of the lever arm value is less than a preset percentage of an initial covariance, and a jitter of the first time delay within a preset time is less than a jitter threshold; and/or
a convergence condition for the wheel velocity coefficient is as follows: a covariance of the wheel velocity coefficient is less than a preset percentage of an initial covariance, and a jitter of the first time delay within a preset time is less than a jitter threshold;
the preset percentage being less than one and greater than zero.

12. The method for calibrating parameters of a sensor based on autonomous driving according to any one of claims 8 to 11, wherein the parameters to be calibrated comprise an installation angle error of the sensor when modeled in a wheel velocity coordinate system, and the sensor comprises the inertial measurement unit, the GPS sensor, and a vehicle-mounted camera; an installation angle error of the inertial measurement unit comprises a pitch angle error and a yaw angle error, an installation angle error of the GPS sensor comprises a yaw angle error, and an installation angle error of the vehicle-mounted camera comprises a yaw angle error;

a calibration condition for the pitch angle error of the inertial measurement unit is as follows: a velocity of the vehicle is greater than a velocity threshold and the vehicle travels at a constant velocity in a straight line;
a calibration condition for the yaw angle error of the inertial measurement unit is as follows: a velocity of the vehicle is greater than a velocity threshold, an acceleration of the vehicle is greater than an acceleration threshold, and the vehicle travels in a straight line;
a calibration condition for the yaw angle error of the GPS sensor is as follows: a velocity of the vehicle is greater than a velocity threshold, and the calibration of the yaw angle error of the inertial measurement unit already meets a convergence condition; and/or
the parameters to be calibrated comprise a local map offset of the high-precision map; and
a calibration condition for the local map offset is as follows: a velocity of the vehicle is greater than a velocity threshold, and the vehicle-mounted camera obtains a high-quality matching and positioning result, wherein the high-quality matching and positioning result is determined based on a quality bit of data in the matching and positioning result.

13. A control apparatus, comprising at least one processor and a storage apparatus configured to store a plurality of program codes, wherein the program codes are adapted to be loaded and executed by the at least one processor to perform a method for calibrating parameters of a sensor based on autonomous driving according to any one of claims 1 to 12.

14. A non-transitory computer-readable storage medium having a plurality of program codes stored therein, wherein the program codes are adapted to be loaded and executed by at least one processor to perform a method for calibrating parameters of a sensor based on autonomous driving according to any one of claims 1 to 12.

**15.** A vehicle, comprising a control apparatus according to claim 13 and a sensor.

S101

Establish a measurement equation for a sensor based on an actual measurement state of the sensor

S102

Establish an observation equation for the sensor based on a transformation relationship between a sensor coordinate system for the sensor and an inertial measurement unit coordinate system for an inertial measurement unit, where the measurement equation and the observation equation contain parameters to be calibrated

S103

Determine whether calibration enable conditions for the parameters to be calibrated are met based on a real-time state of a vehicle

S104

When the calibration enable conditions are met, iteratively update the parameters to be calibrated according to the measurement equation and the observation equation by using a preset extended Kalman filtering model, until convergence conditions for the parameters to be calibrated are met, to implement the calibration of the parameters to be calibrated

*FIG. 1*

S201

Determine a measurement equation for parameters to be calibrated

S202

Determine whether calibration enable conditions are met

No

S205

Exit

Yes

S203

Perform extended Kalman filtering

S204

Obtain a calibration result

*FIG. 2*